# EUROPÄISCHE PATENTSCHRIFT

(11) **EP 3 953 237 B1**
(45) Veröffentlichungstag und Bekanntmachung des Hinweises auf die Patenterteilung: **25.12.2024**
(21) Anmeldenummer: 20727194.1
(22) Anmeldetag: 14.05.2020
(51) Int. Cl.: B62D 15/02

(54) **VERFAHREN ZUM EINZÜGIGEN PARKEN EINES FAHRZEUGS, PARKASSISTENZSYSTEM, SOWIE FAHRZEUG**
METHOD FOR PARKING A VEHICLE IN A SINGLE MOVEMENT, PARKING ASSISTANCE SYSTEM AND VEHICLE
PROCÉDÉ POUR GARER UN VÉHICULE D'UNE TRAITE, SYSTÈME D'AIDE AU STATIONNEMENT, AINSI QUE VÉHICULE

(30) Priorität: 06.06.2019 DE 102019208300
(43) Veröffentlichungstag der Anmeldung: 16.02.2022
(73) Patentinhaber: VOLKSWAGEN AKTIENGESELLSCHAFT, 38440 Wolfsburg (DE)
(72) Erfinder: HÜGER, Philipp, 38471 Rühen (DE); GÖRICKE, Bastian, 38446 Wolfsburg (DE)
(86) Internationale Anmeldenummer: PCT/EP2020/063562
(87) Internationale Veröffentlichungsnummer: WO 2020/244900

(56) Entgegenhaltungen:
- EP-A1- 3 061 655
- WO-A1-2014/188548
- JP-A- 2018 163 112

## Beschreibung

Ein Aspekt der Erfindung betrifft ein Verfahren zum Einparken eines Fahrzeugs in eine Querparklücke, bei welchem das Fahrzeug ausgehend von einem Startpunkt, der sich außerhalb der Parklücke befindet, in einer ersten Fahrtrichtung in einem Zug vollautonom in die Querparklücke eingeparkt wird. Ein weiterer Aspekt der Erfindung betrifft ein Parkassistenzsystem für ein Fahrzeug. Ein nochmals weiterer Aspekt betrifft ein Fahrzeug.

Semiautonome oder vollautonome Parkvorgänge eines Fahrzeugs in Querparklücken sind vielfältig bekannt. Hierzu sind Verfahren bekannt, bei welchen ein dreizügiges Einparken durchgeführt wird. Dies ist üblicherweise ein zeitaufwendiger und komplexer Vorgang.

Verfahren zum automatischen Einparken eines Kraftfahrzeugs sind allgemein beispielsweise aus der DE 100 45 616 A1 und der DE 10 2016 208 900 A1 bekannt.

Gegenüber derartigen dreizügigen Einparkvorgängen, wie sie oben genannt wurden, sind auch einzügige Einparkvorgänge bekannt, die in dem Zusammenhang schneller durchgeführt werden können. In dem Zusammenhang darf auf die DE 10 2009 040 372 A1 verwiesen werden. Dort ist vorgesehen, um eine entsprechende Startposition erreichen zu können, aus welcher ein einzügiges Einparken erfolgen kann, einen spezifischen Bereich auf der Fahrbahn außerhalb der Querparklücke zu bestimmen, in dem sich das Fahrzeug befinden muss, um ein derartiges einzügiges Einparken vornehmen zu können. In dem Zusammenhang kann als Referenzpunkt des Fahrzeugs beispielsweise ein Mittelpunkt einer hinteren Achse des Personenkraftwagens zugrundegelegt werden. Ein wesentlicher Nachteil ist darin zu sehen, dass der dortige Bereich sehr groß ist. Daraus ergeben sich vielfältigste Unwägbarkeiten in der Praxis für das tatsächliche einzügige Einparken. Des Weiteren berechnet die Steuereinrichtung den Bereich für eine Startposition des Personenkraftwagens, während der Fahrer mit dem Personenkraftwagen in Fahrtrichtung weiterfährt. Der Fahrer bekommt dann nur eine Information von der Fahrerassistenzeinrichtung, dass er den Personenkraftwagen stoppen soll und den Parkvorgang beginnen kann, wenn er in den bestimmten Bereich eingefahren ist.

Ein Nachteil dieser Vorgehensweise ist unter anderem auch darin zusehen, dass der Fahrer quasi abrupt und unvermittelt die Mitteilung erhält, das Fahrzeug zu stoppen. Er ist daher im Vorfeld im Ungewissen gelassen, wo er hinfahren soll und wie weit er noch fahren soll, um die entsprechende Startposition zu erreichen. Aufgrund dieses Szenarios kann der Fahrer diesbezüglich überrascht werden und erst später reagieren, sodass das Fahrzeug mit seinem manuellen Führungsvorgang durch den Nutzer gegebenenfalls zu weit fährt und nicht abrupt hält, sodass die von der Steuereinrichtung berechnete Startposition bzw. der Startpunkt nicht erreicht wird und verfehlt wird. Genau dies führt in diesem Stand der Technik dazu, dass dieser vorbestimmte Bereich eine sehr große Fläche aufweist. Da eine derartig große Fläche keinen exakten Startpunkt beziehungsweise keine exakte Startposition vorgibt beziehungsweise vielfältige derartige Positionen vorliegen, ist kein zuverlässiges einzügiges Einparken ermöglicht.

Die JP 2018 163 112 A zeigt die Merkmale des Oberbegriffs des Anspruchs 1 und offenbart ein Verfahren zur automatischen Parksteuerung

Die EP 3 061 655 A1 beschreibt eine automatische Einparksteuerungsvorrichtung.

Die WO 2014/188 548 A1 beschreibt eine automatische Parkassistenzeinrichtung.

Es ist Aufgabe der vorliegenden Erfindung, ein verbessertes Verfahren zum autonomen einzügigen Einparken eines Fahrzeugs in eine Querparklücke zu schaffen. Entsprechend ist es auch Aufgabe, ein Parkassistenzsystem sowie ein Fahrzeug zu schaffen.

Ein Aspekt der Erfindung betrifft ein Verfahren zum Einparken eines Fahrzeugs in eine Querparklücke, bei welchem das Fahrzeug ausgehend von einem Startpunkt, der sich außerhalb der Querparklücke befindet, in einer ersten Fahrtrichtung in einem Zug vollautonom in die Querparklücke eingeparkt wird. Die Querparklücke wird mit zumindest einer Erfassungseinheit des Fahrzeugs erfasst und nach dem Erfassen wird das Fahrzeug vollautonom mit einem Fahrmanöver, das in eine zur ersten Fahrtrichtung entgegengesetzte Fahrtrichtung durchgeführt wird, zum Startpunkt manövriert. Bei dem Verfahren wird somit in definierter zeitlicher Reihenfolge nach der Erfassung der Querparklücke, in welchem die Querparklücke als geeignet zum Einparken erkannt wurde, ein erstes vollautonomes Fahrmanöver durchgeführt. Dieses findet noch außerhalb der Querparklücke statt und findet in eine ganz definierte Fahrtrichtung statt, nämlich in die zweite Fahrtrichtung. Dieses vollautonome Fahrmanöver ist dazu vorgesehen, dass nach dem Erfassen der Querparklücke das Fahrzeug überhaupt zum auch bereits bestimmten Startpunkt, von dem ausgehend dann das einzügige Einparken in die Querparklücke erfolgt, durchgeführt wird. Insbesondere ist dieses vollautonome Fahrmanöver, bei welchem das Fahrzeug in dieser zur ersten Fahrtrichtung entgegengesetzten zweiten Fahrtrichtung zum Startpunkt hin manövriert wird, vollständig außerhalb der Querparklücke. Durch ein derartiges Szenario wird es somit erreicht, dass der Startpunkt exakter erreicht werden kann. Damit einhergehend ist dann auch ein sehr präzises und schnelles einzügiges Einparken von dem erreichten Startpunkt bis zur Endposition in der Querparklücke in einem Zug ermöglicht. Insbesondere ist vorgesehen, dass eine erste Fahrtrichtung ein Vorwärtsfahren oder ein Rückwärtsfahren sein kann. In dem Zusammenhang ist die zur ersten Fahrtrichtung entgegengesetzte Fahrtrichtung dann ein Rückwärtsfahren oder entsprechend ein Vorwärtsfahren. In dem Sinne ist ein Fahren in eine entgegengesetzte Fahrtrichtung nicht dahingehend zu verstehen, dass dann Richtungsvektoren parallel sein müssen, sondern es können diesbezüglich vielfältige Bewegungen erfolgen. Ansonsten ist es in beiden Bewegungen entlang der unterschiedlichen entgegengesetzten Fahrtrichtungen möglich, auch nicht-geradlinige Bewegungen durchzuführen und somit das Fahrzeug auch nicht-geradlinig zu bewegen. Die erste Fahrtrichtung kann ein Vorwärtsfahren, auch nicht-geradlinig, sein. Die zweite Fahrtrichtung kann dann ein Rückwärtsfahren, auch nicht-geradlinig sein.

Es ist vorgesehen, dass ein Startpunkt für ein Einparken in einem Zug, insbesondere nur, dann bestimmt wird, wenn sich das Fahrzeug bei der Vorbeifahrt an der Parklücke zumindest zeitweise in einem lateralen Abstand zu einem Parklückeneingang befindet, der in Summe mit der Tiefe der Parklücke kleiner ist, als die maximale Detektionsreichweite der Erfassungseinheit des Fahrzeugs. Dies ist eine weitere sehr vorteilhafte Ausführung, da somit weiteren Aspekten einerseits bei der genauen Parklückenbestimmung Rechnung getragen wird, andererseits der genauen Bestimmung des Startpunkts Rechnung getragen wird. Ist in dem Zusammenhang nämlich ein Fahrzeug mit seiner der Querparklücke zugewandten Längsseite zu weit von dem Parklückeneingang entfernt, kann es gegebenenfalls vorkommen, dass die Erfassungseinheit nicht mehr bis zum ganz hinteren Rand der Querparklücke detektieren kann. Daraus ergibt sich gegebenenfalls nur eine unzureichende Information über die Querparklücke. Um hier gerade für das einzügige Parken die diesbezüglichen Unwägbarkeiten zu vermeiden oder so gering wie möglich zu halten, ist diese vorteilhafte Ausführung vorgesehen. Da gerade bei einem einzügigen Einparken eine noch höhere Anforderung an die Exaktheit der Startposition gelegt wird, ist diese Vorgehensweise von Vorteil. In einer vorteilhaften Ausführung kann in dem Zusammenhang vorgesehen sein, dass Informationen an den Nutzer durch das Parkassistenzsystem bereitgestellt werden, in welchem Abstand er sich zum Parklückeneingang mit dem Fahrzeug bewegen soll, wenn die Vorbeifahrt an der Querparklücke zumindest teilweise manuell durch den Fahrer durchgeführt wird. Damit wird eine Unterstützung dahingehend gegeben, dass der Fahrer nicht in einem zu großen lateralen Abstand vorbeifährt, die Erfassung der Querparklücke in dem Zusammenhang dann maximal nur unzureichend erfolgen kann und das weitere Szenario daher länger dauert oder die Querparklücke nicht als geeignet erkannt wird und/oder ein einzügiges Einparken als gegebenenfalls nicht möglich erkannt wird. Es kann jedoch auch vorgesehen sein, dass dann, wenn die Vorbeifahrt bereits in einem vollautonomen Modus des Fahrzeugs durchgeführt wird, das Fahrzeug selbstständig einen derartigen lateralen Abstand zu einem Parklückeneingang einnimmt, der auch die vollständige Erfassung der Querparklücke ermöglicht. Diese einerseits ausgegebenen Informationen und/oder im vollautonomen Betrieb durchgeführten Fahrmanöver des Fahrzeugs selbst, um den lateralen Abstand diesbezüglich einzustellen, basieren wesentlich auf der bekannten Information über den Erfassungsbereich beziehungsweise der maximalen Detektionsreichweite der Erfassungseinheit.

Es ist eine Detektionsreichweite der Erfassungseinheit kleiner oder gleich 5 m. Zur Bestimmung des Startpunkts wird das Fahrzeug in einem lateralen Abstand zwischen 0,5 m und 2 m zum Parklückeneingang der Querparklücke auf der Fahrbahn entlanggeführt. Insbesondere ist es vorgesehen, dass die Unterscheidung, ob ein einzügiges oder mehrzügiges Einparken in eine Querparklücke durchgeführt wird, von der Anhalteposition beziehungsweise dem Startpunkt abhängt. In Bereichen, die dem Parklückeneingang der Querparklücke auf der Fahrbahn zugewandt sind und diesbezüglich direkt angrenzen, ist üblicherweise nur ein mehrzügiges Einparken in die Querparklücke möglich.

In einer vorteilhaften Ausführung ist vorgesehen, dass das Manövrieren in der zweiten Fahrtrichtung zum Startpunkt hin ausgehend von einer Stillstandposition des Fahrzeugs durchgeführt wird. Insbesondere wird die Stillstandposition nach dem Erfassen und Erkennen der Querparklücke als geeignet eingenommen. Insbesondere ist die Stillstandposition auch vollständig außerhalb der Querparklücke, insbesondere auf der Fahrbahn. Bei der Bewegung von der Stillstandposition zum Startpunkt führt das Fahrzeug insbesondere eine Bewegung nur in dieser einen entgegengesetzten Fahrtrichtung durch. Ein Wechsel von der diesbezüglich entgegengesetzten Fahrtrichtung auf die erste Fahrtrichtung ist bei diesem Manöver von der Stillstandposition zum Startpunkt nicht durchgeführt. Auch dadurch wird ein sehr zielgerichtetes und zügiges Manövrieren von der Stillstandposition zum Startpunkt vollautonom durchgeführt. Auch dadurch kann ein entsprechend exaktes Fahrmanöver erfolgen, welches das Fahrzeug sehr zielgerichtet und effizient zum Startpunkt bringt.

Insbesondere wird somit, wie bereits oben dargelegt, das Manövrieren zum Startpunkt nur in dieser zweiten Fahrtrichtung durchgeführt.

Vorzugsweise ist vorgesehen, dass die Stillstandposition des Fahrzeugs auf der Fahrbahn ist, die an die Querparklücke anschließt. Die Stillstandposition ist insbesondere in Längsrichtung der Fahrbahn im vorbeigefahrenen Zustand des Fahrzeugs an der Querparklücke seitlich zur Querparklücke, sodass sich zumindest eine Referenzstelle des Fahrzeugs, die an den Startpunkt gebracht werden muss, seitlich zur Querparklücke befindet. Die Referenzstelle ist eine Referenzstelle des Fahrzeugs. Sie ist insbesondere ein Mittelpunkt einer hinteren Achse des Fahrzeugs. Bei diesem Szenario ist also vorgesehen, dass das Fahrzeug auf dieser Referenzstelle quasi vollständig an der Querparklücke in dieser ersten Fahrtrichtung vorbeifährt, sodass diese Referenzstelle quasi auf der Fahrbahn über die gesamte Breite der Querparklücke bewegt wird.

Es ist eine besonders genaue und präzise Erfassung der Querparklücke ermöglicht und das Fahrzeug bereits so weit an der Querparklücke vorbeigeführt, dass bei dem vollautonomen Manövriervorgang dann nur noch eine sehr kurze Strecke von der Stillstandposition zum Startpunkt durchfahren werden muss. Bei diesem Szenario ist es daher möglich, dass die Stillstandposition bereits so genau und präzise vorgenommen werden kann, dass nur noch bei diesem weiteren vollautonomen Fahrmanöver von der Stillstandposition zum Startpunkt gegebenenfalls eine relativ kurze Strecke und/oder geringe Lenkbewegungen durchgeführt werden müssen.

Es kann auch vorgesehen sein, dass in einer alternativen Ausführung während der Vorbeifahrt des Fahrzeugs an der Querparklücke das Fahrzeug ohne Stillstand des Fahrzeugs in Richtung des Startpunkts vollautonom manövriert wird, sodass hier in einem kontinuierlichen und ununterbrochenen Fahrmanöver an der Querparklücke vorbeigefahren wird, die Querparklücke erfasst wird und in einem kontinuierlichen Prozess das vollautonome Weiterbewegen derart durchgeführt wird, dass dann unverzüglich die seitlich zur Querparklücke auf der Fahrbahn definierte Startposition beziehungsweise der Startpunkt ebenfalls präzise erreicht wird.

Bei einem einzügigen Einparken ist in vorteilhafter Weise von einem dann maximalen Lenkeinschlag der lenkbaren Räder des Fahrzeugs, insbesondere der Vorderräder des Fahrzeugs, ausgegangen, was insbesondere für den Beginn des Einparkvorgangs gilt. Als laterale Richtung anschließend an diesen Bereich auf der Fahrbahn außerhalb der Querparklücke ist dann ein relativ kleiner, streifenförmiger Flächenbereich fiktiv möglich, bei welchem sich ein einzügiges Einparken mit maximalem Lenkeinschlag zu Beginn des Einparkvorgangs erreichen lässt und die Querparklücke in ihrer Tiefe vollständig mit der Erfassungseinheit erfasst werden kann. Insbesondere ist dies dahingehend zu sehen, dass ein mittiges Einfahren des Fahrzeugs in die Querparklücke durch diesen maximalen Lenkwinkel erreicht wird.

Es wird also auch vorgesehen, dass nach Detektion beziehungsweise Erfassung der Querparklücke zu Beginn des vollautomatischen einzügigen Einparkens die Lenkung angesteuert und das Fahrzeug, insbesondere ausgehend von einer Stillstandposition, vorwärts in die Startposition beziehungsweise zum Startpunkt manövriert wird. Bei einer Variante erfolgt, wie dies bereits oben dargelegt ist, die Vorbeifahrt an der Querparklücke als Parklückensuchfahrt automatisch mit insbesondere einer Längsführung und einer Querführung. Bei erkannter und geeigneter Querparklücke positioniert sich das Fahrzeug dann vollautonom an der Anhalteposition beziehungsweise dem Startpunkt, um ausgehend davon dann ein einzügiges Einparken in die Querparklücke durchzuführen und dies durch eine Rückwärtsfahrt durchzuführen. Hier erfolgen die Fahrmanöver zum Erreichen des Startpunkts bereits auf Höhe der Querparkfläche selbst und nicht erst nach dem erfolgten vollständigen Vorbeifahren der Referenzstelle des Fahrzeugs an der Querparklücke.

Ein weiterer unabhängiger Aspekt der Erfindung betrifft ein Verfahren zum Einparken eines Fahrzeugs in eine Querparklücke, bei welchem das Fahrzeug ausgehend von einem Startpunkt in einem Zug zumindest semiautonom in die Querparklücke eingeparkt wird. Der Startpunkt wird nach der Erfassung der Querparklücke mit zumindest einer Erfassungseinheit des Fahrzeugs so bestimmt, dass das Einparken in einem Zug ermöglicht ist. Bei diesem Verfahren wird der Fahrer des Fahrzeugs nach dem Erfassen der Querparklücke und nach dem Bestimmen des Startpunkts mit Anweisungen von einem Parkassistenzsystem des Fahrzeugs zum Führen des Fahrzeugs vor dem Erreichen dieses Startpunkts versorgt beziehungsweise erhält derartige Anweisungen auf dem Manövrierweg hin zum Startpunkt, um das Fahrzeug zumindest semiautonom zum Startpunkt zu manövrieren. Bei diesem Aspekt der Erfindung ist somit das Fahrmanöver, welches seit dem Erfassen der Querparklücke und dem Bestimmen des Startpunkts bis hin zum Startpunkt durchgeführt wird, unterstützt. Es erfolgt somit keine abrupte Information des Systems, das Fahrzeug unvermittelt zu stoppen, sondern der Fahrer wird in dem Zusammenhang umfänglich informiert, sodass er verbessert auf den nahenden Startpunkt vorbereitet ist, diesbezüglich vorbereitet auf ein mögliches Stoppen des Fahrzeugs ist und diesbezüglich auch gezielter und präziser zum Startpunkt fährt.

Die Anweisungen können in dem Zusammenhang akustisch und/oder durch eine optische Anzeige auf einer Anzeigeeinheit erfolgen.

Ein weiterer unabhängiger Aspekt der Erfindung betrifft ein Verfahren zum Einparken eines Fahrzeugs in eine Querparklücke, bei welchem das Fahrzeug ausgehend von einem Startpunkt, der sich außerhalb der Querparklücke befindet, in einer ersten Fahrtrichtung in einem Zug vollautonom in die Querparklücke, insbesondere bis zu einer Endposition, eingeparkt wird. Hierbei wird das Fahrzeug vorwärts auf der Fahrbahn, die an die Querparklücke angrenzt, bewegt und bei Annähern an die Querparklücke durch zumindest eine Erfassungseinheit des Fahrzeugs so erfasst, dass das mögliche Einparken des Fahrzeugs in die Querparklücke erkannt wird, wobei das Einparken, insbesondere ohne ein Rückwärtsfahren, durch Fortführen der Vorwärtsfahrt in einem Zug in die Querparklücke durchgeführt wird, insbesondere mit einem Zug in die Querparklücke bewegt wird. Durch dieses Verfahren ist es somit auch möglich, ein einzügiges Vorwärtseinparken in eine Querparklücke durchzuführen, ohne dass das Fahrzeug vor diesem einzügigen Einparken zunächst einmal vollständig an der Querparklücke vorbeifahren muss. Insbesondere ist hierzu vorgesehen, dass entsprechende Erfassungseinheiten an frontseitigen Eckbereichen des Fahrzeugs angeordnet sind. Dadurch ist es ermöglicht, eine Querparklücke frühzeitig, insbesondere auch vollständig, zu erfassen, um dann ein einzügiges Vorwärtseinparken zu bestimmen, ohne dass das Fahrzeug zunächst vollständig an der Querparklücke vorbeifahren muss. Insbesondere kann hier eine Sensorik vorgesehen sein, die in einem Eckbereich verbaut ist und diesbezüglich schräg zur Seite detektiert. Beispielsweise kann dies ein Radarsensor sein, der an einem Fronteckbereich des Fahrzeugs verbaut ist und seitlich schräg nach vorne detektiert.

Ein weiterer Aspekt der Erfindung betrifft ein Parkassistenzsystem für ein Fahrzeug. Das Parkassistenzsystem weist zumindest eine Steuereinheit und zumindest eine Erfassungseinheit auf. Das Parkassistenzsystem ist zum Durchführen eines Verfahrens gemäß einem oben genannten Aspekt ausgebildet. Insbesondere wird ein derartiges Verfahren mit dem Parkassistenzsystem durchgeführt.

Vorteilhafte Ausführungen eines genannten Verfahrens sind als vorteilhafte Ausführungen des Parkassistenzsystems anzusehen. Ein weiterer Aspekt der Erfindung betrifft ein Fahrzeug, welches ein Parkassistenzsystem gemäß dem oben genannten Aspekt aufweist.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Draufsicht auf ein Ausführungsbeispiel zum Einparken eines Fahrzeugs in eine Querparklücke;
- Fig. 2: eine schematische Draufsicht auf ein weiteres Ausführungsbeispiel zum Einparken eines Fahrzeugs in eine Querparklücke; und
- Fig. 3: eine schematische Draufsicht auf ein weiteres Ausführungsbeispiel zum Einparken eines Fahrzeugs in eine Querparklücke.

Bei dem im Folgenden erläuterten Ausführungsbeispiel handelt es sich um eine bevorzugte Ausführungsform der Erfindung.

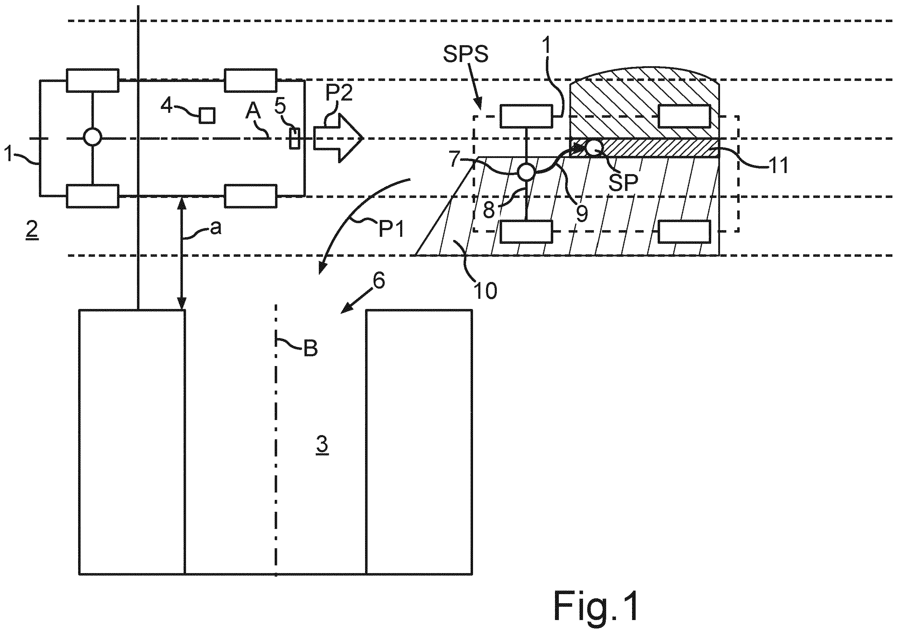

In den Figuren sind funktionsgleiche Elemente jeweils mit denselben Bezugszeichen versehen. In Fig. 1 ist in einer schematischen Draufsicht ein Fahrzeug 1 gezeigt, welches hier ein Kraftfahrzeug, insbesondere ein Personenkraftwagen, ist. Das Fahrzeug 1 weist eine Längsachse A auf und befindet sich auf einer Fahrbahn 2. Seitlich an die Fahrbahn 2 anschließend ist zumindest eine Querparklücke 3 ausgebildet. Das Fahrzeug 1 weist ein Parkassistenzsystem 4 auf. Dieses weist eine Steuereinheit und zumindest eine Erfassungseinheit auf, die an dem Fahrzeug 1 angeordnet ist. Beispielhaft ist hier eine Erfassungseinheit 5 gezeigt. Diese ist weder in Anzahl, noch in Position einschränkend zu verstehen, sondern soll lediglich symbolhaft unterschiedlichste Ausgestaltungen darstellen. Die Erfassungseinheit 5 kann mehrere Sensoren aufweisen. Diese können unterschiedlich verteilt an dem Fahrzeug 1 angeordnet sein. Dies können Ultraschallsensoren und/oder Radarsensoren und/oder Lidarsensoren und/oder Kameras sein.

Die Querparklücke 3 weist einen der Fahrbahn 2 zugewandten Parklückeneingang 6 auf. Über diesen Parklückeneingang 6 soll das Fahrzeug 1 in einem einzügigen Einparkvorgang eingeparkt werden und dort somit eine Endposition erreichen.

Dazu ist vorgesehen, dass sich das Fahrzeug 1 auf der Fahrbahn 1 entlang einer ersten Fahrtrichtung P1 bewegt. Wie in der schematischen Darstellung in Fig. 1 zu erkennen ist, befindet sich das Fahrzeug 1 zumindest noch in einem lateralen Abstand a zum Parklückeneingang 6. Der Abstand a beträgt insbesondere zwischen 0,5 m und 2 m. Insbesondere ist dieser Abstand a abhängig von einer maximalen seitlichen Detektionsreichweite der Erfassungseinheit 5. Der Abstand a ist darüber hinaus zwischen einer Längsseite des Fahrzeugs 1, die der Querparklücke 3 zugewandt ist, und dem Parklückeneingang 6 bemessen. Dieser Abstand a ermöglicht es bei einer Detektionsreichweite der Erfassungseinheit 5, die kleiner oder gleich 5 m, insbesondere zwischen 3 m und 5 m liegt, wie dies beispielsweise bei Ultraschallsensoren der Fall ist, bei der Vorbeifahrt an der Querparklücke 3 die Querparklücke 3 vollständig zu erfassen und somit auch die in Richtung einer Längsachse B der Querparklücke 3 bemessene Tiefe der Querparklücke 3 zu erfassen.

Es ist vorgesehen, dass durch das Parkassistenzsystem 4 die Querparklücke 3 mit zumindest einer Erfassungseinheit 5 des Fahrzeugs 1 erfasst wird und nach dem Erfassen das Fahrzeug 1 und vor dem einzügigen tatsächlichen Einparken vollautonom mit einem Fahrmanöver, das in eine zur ersten Fahrtrichtung P1 entgegengesetzte Fahrtrichtung P2 erfolgt zu einem Startpunkt SP manövriert wird. Hierzu ist vorzugsweise vorgesehen, dass das Manövrieren in dieser zweiten Fahrtrichtung P2 zum Startpunkt SP ausgehend von einer gestrichelt gezeigten Stillstandposition des Fahrzeugs 1, wie sie in Fig. 1 durch die Position SPS symbolisiert ist, durchgeführt wird. Insbesondere wird in dem Zusammenhang eine Referenzstelle 7 des Fahrzeugs 1 definiert, die zu dem Startpunkt SP verbracht werden soll. Diese Referenzstelle 7 ist vorzugsweise der Mittelpunkt einer Hinterachse 8 des Fahrzeugs 1.

Wie in Fig. 1 beispielhaft dargestellt, wird dieses Manövrieren von der Stillstandposition SPS zum Startpunkt SP nur in dieser zweiten Fahrtrichtung P2 durchgeführt. Das diesbezügliche Manöver, das von dieser Stillstandposition SPS bis zu diesem Startpunkt SP erfolgt, ist in Fig. 1 durch die Linie, die die entsprechende Trajektorie 9 darstellen soll, symbolisiert.

Es ist in dem Zusammenhang auch zu erkennen, dass ein fiktiver erster Bereich 10 auf der Fahrbahn 2 außerhalb der Querparklücke 3 und bezüglich der Längsachse B seitlich versetzt zur Querparklücke 3 vorliegt, in dem nur ein mehrzügiges, insbesondere zumindest dreizügiges, Einparken in die Querparklücke 3 ermöglicht ist. Bei dem Beispiel in Fig. 1 ist zu erkennen, dass das Fahrzeug 1 in der Stillstandposition SPS beispielsweise so positioniert ist, dass diese Referenzstelle 7 noch innerhalb dieses Bereichs 10 angeordnet ist. Dies bedeutet, dass in dieser Stillstandposition SPS noch kein einzügiges Einparken in Richtung der ersten Fahrtrichtung P1 in die Querparklücke 3 ermöglicht ist. Daher wird in dem Zusammenhang das vollautonome Manövrieren des Fahrzeugs 1 von dieser Stillstandposition SPS in die Position SP vollzogen. In dem Zusammenhang ist dann diese Referenzstelle 7 an einem Startpunkt SP, der lateral weiter beabstandet von der Querparklücke 3 als der Bereich 10 ist. Diesbezüglich ist ein fiktiver Bereich 11 auf der Fahrbahn 2 gebildet, der durch das Parkassistenzsystem 4 bestimmt ist und aus welchem ein einzügiges Einparken in Richtung der ersten Fahrtrichtung P1 in die Querparklücke 3 ermöglicht ist, wenn sich die Referenzstelle 7 darin befindet. Und insbesondere bei der Vorbeifahrt an der Querparklücke 3 diese auch in der Tiefe mit der Erfassungseinheit 5 vollständig erfasst werden konnte. Wie zu erkennen ist, ist dieser Bereich 11 sowohl entlang der Längsrichtung der Fahrbahn 2 als auch in lateraler Richtung zur Querparklücke 3 kleiner als der Bereich 10. Insbesondere in lateraler Richtung ist der Bereich 11 um ein Vielfaches kleiner als der Bereich 10. Er ist insbesondere als Streifen gebildet.

Die Stillstandposition SPS des Fahrzeugs 1 auf der Fahrbahn 2 ist eine Position, bei welcher insbesondere diese Referenzstelle 7 einmal vollständig über die gesamte Breite der Querparklücke 3 an der Querparklücke 3 auf der Fahrbahn 2 vorbeigefahren ist und sich dann seitlich außerhalb der Querparklücke 3 befindet. Ist das Fahrzeug 1 dann ausgehend von dieser Stillstandposition SPS in die Startposition beziehungsweise zum Startpunkt SP gebracht, wird dann das Einparken in die Querparklücke 3 entlang der ersten Fahrtrichtung P1 in einem Zug rückwärts durchgeführt.

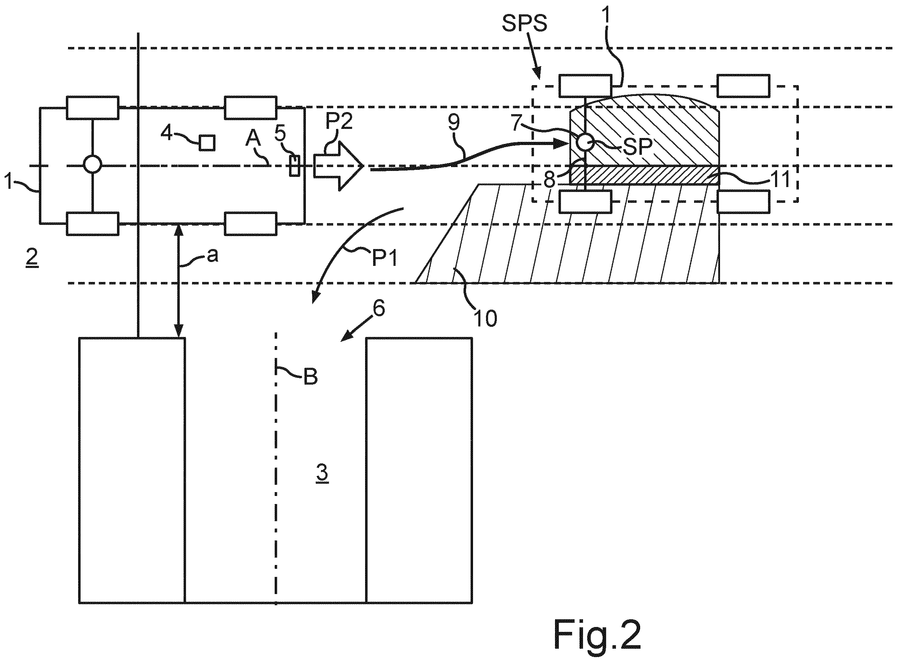

In Fig. 2 ist ein entsprechendes Szenario wie in Fig. 1 gezeigt. Im Unterschied zu Fig. 1 ist hier vorgesehen, dass bereits während der Vorbeifahrt des Fahrzeugs 1 an der Querparklücke 3 das Fahrzeug 1 ohne Stillstand des Fahrzeugs 1 in Richtung des Startpunkts SP vollautonom manövriert wird. Wie zu erkennen ist, erfolgt diesbezüglich bereits bei der Vorbeifahrt eine Manövrierung des Fahrzeugs 1 durch das Parkassistenzsystem 4 vollautonom dahingehen, dass auch auf Höhe der Querparkfläche 3 schon Lenkbewegungen vollzogen werden, die eine Referenzstelle 7 des Fahrzeugs 1 zum Startpunkt SP manövriert. Hierbei erfolgt bereits bei der Vorbeifahrt an der Querparklücke 3 eine Parklückensuchfahrt automatisch mit dem Manöver zum Startpunkt SP. Bei erkannter Querparklücke 3 positioniert sich das Fahrzeug 1 vollautonom auf der bestimmten Startposition beziehungsweise dem bestimmten Startpunkt SP, um nachfolgend dann einzügig in die Querparklücke 3 einparken zu können.

Insbesondere wird ein Startpunkt SP bei dem Ausführungsbeispiel für ein Einparken in einem Zug, insbesondere nur, dann bestimmt, wenn sich das Fahrzeug 1 bei der Vorbeifahrt an der Querparklücke 3 zumindest zeitweise in einem lateralen Abstand a zu einem Parklückeneingang 6 befindet, der in Summe mit der Tiefe der Querparklücke 3 kleiner ist, als die maximale Detektionsreichweite der Erfassungseinheit 5 des Fahrzeugs 1.

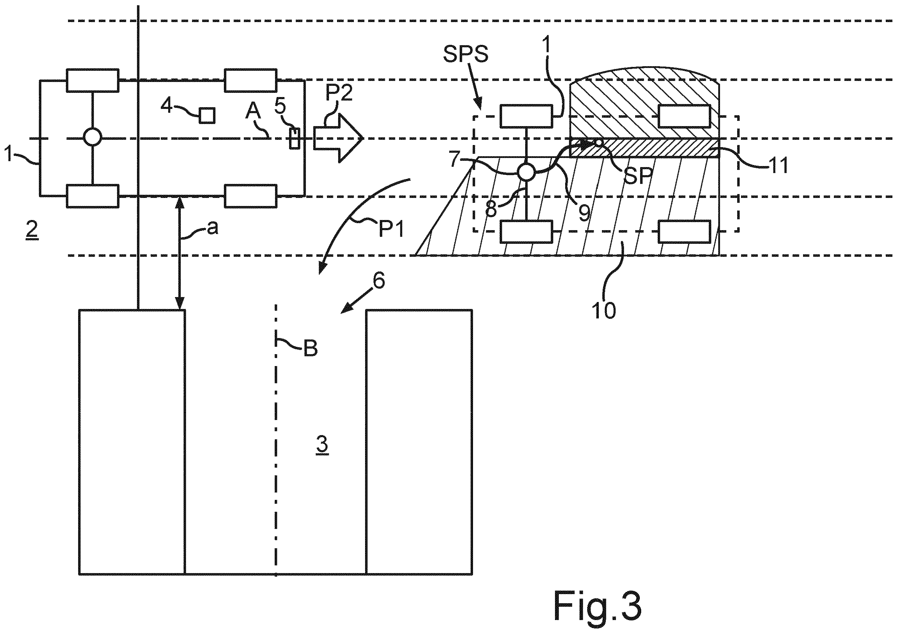

In Fig. 3 ist in einer weiteren schematischen Draufsichtdarstellung ein weiteres Ausführungsbeispiel gezeigt. Bei diesem Beispiel ist vorgesehen, dass ein Verfahren zum Einparken eines Fahrzeugs 1 in die Querparklücke 3 durchgeführt wird. Bei diesem Verfahren wird das Fahrzeug 1 ausgehend von einem Startpunkt SP in einem Zug zumindest semiautonom in die Querparklücke 3 eingeparkt, wobei der Startpunkt SP nach der Erfassung der Querparklücke 3 mit zumindest einer Erfassungseinheit 5 des Fahrzeugs 1 so bestimmt wird, dass das Einparken in einem Zug ermöglicht ist. Der Fahrer des Fahrzeugs 1 wird bei diesem Szenario nach dem Erfassen der Querparklücke 3 und dem Bestimmen des Startpunkts SP mit Anweisungen zum Führen des Fahrzeugs 1 von einem Fahrzeugführungssystem, insbesondere dem Parkassistenzsystem 4, versorgt. Er erhält also derartige Anweisungen von dem Parkassistenzsystem 4 auch vor dem Erreichen des Startpunkts SP, um das Fahrzeug zum Startpunkt SP zumindest semiautonom manövrieren zu können. Es werden also auf dem Manövrierweg von der in Fig. 3 beispielhaften Position MP, die nach dem Erfassen der Querparklücke 3 und nach dem Bestimmen des Startpunkts SP durch das Parkassistenzsystem 4 eingenommen wird, diese Anweisungen vom Parkassistenzsystem 4 gegeben, sodass im Weiteren die Trajektorie 9 durchfahren wird. Beim Durchfahren der Trajektorie 9 werden diese Anweisungen von dem Parkassistenzsystem 4 an den Fahrer auch vor dem Erreichen des Startpunkts SP ausgegeben, sodass hier dieses manuelle Manövrieren des Fahrers auf der Trajektorie 9 durchgeführt werden kann. Ist dann das Fahrzeug 1 durch den Fahrer unter Berücksichtigung der vom Parkassistenzsystem 4 ausgegebenen Anweisungen mit dem Referenzpunkt beziehungsweise der Referenzstelle 7 auf dem Startpunkt SP angelangt, erfolgt im Weiteren dann das vollautonome einzügige Einparken in dieser ersten Fahrtrichtung gemäß P1 in die Querparklücke 3.

In einem weiteren Verfahren kann vorgesehen sein, dass ein Einparken eines Fahrzeugs 1 in die Querparklücke 3 ausgehend von einem Startpunkt durchgeführt wird, der sich außerhalb der Querparklücke 3 befindet. In einem einzigen Zug wird durch ein Manöver in eine erste Fahrtrichtung ein vollautonomes Einparken in die Querparklücke 3 durchgeführt. Das Fahrzeug 1 wird bei diesem Szenario vorwärts auf der Fahrbahn 2, die an die Querparklücke 3 angrenzt, bewegt, und bei einem Annähern an die Querparklücke 3 wird durch zumindest eine Erfassungseinheit 5 des Fahrzeugs 1 die Querparklücke 3 bereits so erfasst, dass das mögliche Einparken des Fahrzeugs 1 in die Querparklücke 3 erkannt wird, wobei das Einparken ohne ein Rückwärtsfahren des Fahrzeugs 1 durch Fortführen der vollzogenen Vorwärtsfahrt in einem Zug in die Querparklücke 3 durchgeführt wird, insbesondere in einem Zug vorwärts bis zur Endposition in die Querparklücke 3 bewegt wird.

## Patentansprüche

1. Verfahren zum Einparken eines Fahrzeugs (1) in eine Querparklücke (3), bei welchem das Fahrzeug (1) ausgehend von einem Startpunkt (SP), der sich außerhalb der Querparklücke (3) befindet, in einer ersten Fahrtrichtung (P1) in einem Zug vollautonom in die Querparklücke (3) eingeparkt wird, wobei
die Querparklücke (3) mit einer Erfassungseinheit (5) des Fahrzeugs (1) erfasst und nach dem Erfassen das Fahrzeug (1) vollautonom mit einem Fahrmanöver, das in eine zur ersten Fahrtrichtung (P1) entgegengesetzte Fahrtrichtung (P2) durchgeführt wird, zum Startpunkt (SP) manövriert wird,
**dadurch gekennzeichnet, dass**
ein Startpunkt (SP) für ein Einparken in einem Zug dann bestimmt wird, wenn sich das Fahrzeug (1) bei der Vorbeifahrt an der Querparklücke (3) zumindest zeitweise in einem lateralen Abstand (a) zu einem Parklückeneingang (6) befindet, der in Summe mit der Tiefe der Querparklücke (3) kleiner ist, als die maximale Detektionsreichweite der Erfassungseinheit (5) des Fahrzeugs (1), und wobei eine Detektionsreichweite der Erfassungseinheit (5) kleiner oder gleich 5m ist, und zur Bestimmung des Startpunkts (SP), das Fahrzeug (1) in einem lateralen Abstand zwischen 0,5 und 2m, zum Parklückeneingang (6) auf der Fahrbahn (2) entlang fährt.

2. Verfahren nach Anspruch 1,
**dadurch gekennzeichnet, dass**
das Manövrieren in der zweiten Fahrtrichtung (P2) zum Startpunkt (SP) ausgehend von einer Stillstandposition (SPS) des Fahrzeugs (1) durchgeführt wird.

3. Verfahren nach Anspruch 2,
**dadurch gekennzeichnet, dass**
das Manövrieren zum Startpunkt (SP) nur in der zweiten Fahrtrichtung (P2) durchgeführt wird.

4. Verfahren nach Anspruch 2 oder 3,
**dadurch gekennzeichnet, dass**
die Stillstandposition (SPS) des Fahrzeugs (1) auf der Fahrbahn (2) ist, die an die Querparklücke (3) anschließt, wobei die Stillstandposition in Längsrichtung der Fahrbahn (2) im vorbeigefahrenen Zustand des Fahrzeugs (1) an der Querparklücke (3) seitlich zur Querparklücke (3) ist, so dass zumindest eine Referenzstelle (7), die an den Startpunkt (SP) gebracht werden muss, seitlich zur Querparklücke (3) sich befindet.

5. Verfahren nach Anspruch 1,
**dadurch gekennzeichnet, dass**
während der Vorbeifahrt des Fahrzeugs (1) an der Querparklücke (3) das Fahrzeug (1) ohne Stillstand des Fahrzeugs (1) in Richtung des Startpunkts (SP) vollautonom manövriert wird.

6. Verfahren nach einem der vorhergehenden Ansprüche,
**dadurch gekennzeichnet, dass**
als eine Referenzstelle (7) des Fahrzeugs (1), die an den Startpunkt (SP) bewegt wird, ein Mittelpunkt einer Hinterachse (8) des Fahrzeugs (1) zu Grunde gelegt wird.

7. Parkassistenzsystem (4) für ein Fahrzeug (1), mit einer Steuereinheit und einer Erfassungseinheit (5), welches zum Durchführen eines Verfahrens zum Einparken eines Fahrzeugs (1) nach Anspruch 1 bis 6 ausgebildet ist.

8. Fahrzeug (1), mit einem Parkassistenzsystem (4) nach Anspruch 7.

## Claims

1. Method for parking a vehicle (1) in a perpendicular parking space (3), in which method the vehicle (1) is parked in the perpendicular parking space (3) fully autonomously in one movement in a first direction of travel (P1) starting from a start point (SP) that is located outside the perpendicular parking space (3), wherein
the perpendicular parking space (3) is detected by a detection unit (5) of the vehicle (1) and, following detection, the vehicle (1) is manoeuvred fully autonomously to the start point (SP) by way of a driving manoeuvre that is performed in a direction of travel (P2) counter to the first direction of travel (P1), **characterized in that**
a start point (SP) for parking in one movement is determined when the vehicle (1), when driving past the perpendicular parking space (3), is located at least temporarily at a lateral distance (a) from a parking space entrance (6) that, when summed with the depth of the perpendicular parking space (3), is smaller than the maximum detection range of the detection unit (5) of the vehicle (1), and wherein a detection range of the detection unit (5) is less than or equal to 5 m, and, to determine the start point (SP), the vehicle (1) drives along the road (2) at a lateral distance of between 0.5 and 2 m to the parking space entrance (6).

2. Method according to Claim 1,
**characterized in that**
the manoeuvring in the second direction of travel (P2) to the start point (SP) is performed starting from a stationary position (SPS) of the vehicle (1).

3. Method according to Claim 2,
**characterized in that**
the manoeuvring to the start point (SP) is performed only in the second direction of travel (P2).

4. Method according to Claim 2 or 3,
**characterized in that**
the stationary position (SPS) of the vehicle (1) is on the road (2) adjoining the perpendicular parking space (3), wherein the stationary position is to the side of the perpendicular parking space (3) in the longitudinal direction of the road (2) in the state when the vehicle (1) has driven past the perpendicular parking space (3), such that at least one reference point (7) that is to be brought to the start point (SP) is located to the side of the perpendicular parking space (3).

5. Method according to Claim 1,
**characterized in that**,
while the vehicle (1) is driving past the perpendicular parking space (3), the vehicle (1) is manoeuvred fully autonomously in the direction of the start point (SP) without the vehicle (1) being brought to a standstill.

6. Method according to one of the preceding claims, **characterized in that**
a centre point of a rear axle (8) of the vehicle (1) is taken as a basis for a reference point (7) of the vehicle (1) that is moved to the start point (SP).

7. Parking assistance system (4) for a vehicle (1), comprising a control unit and a detection unit (5) that is designed to perform a method for parking a vehicle (1) according to claim 1 to 6.

8. Vehicle (1), comprising a parking assistance system (4) according to Claim 7.

## Revendications

1. Procédé de stationnement d'un véhicule (1) dans une place de stationnement en bataille (3), procédé dans lequel le véhicule (1) est stationné en une seule fois de manière totalement autonome dans la place de stationnement en bataille (3) dans un premier sens de déplacement (P1) à partir d'un point de départ (SP) qui est situé à l'extérieur de la place de stationnement en bataille (3),
la place de stationnement en bataille (3) étant détectée par une unité de détection (5) du véhicule (1) et, après détection, le véhicule (1) étant manoeuvré de manière totalement autonome jusqu'au point de départ (SP) avec une manoeuvre qui est effectuée dans un sens de déplacement (P2) opposé au premier sens de déplacement (P1),
**caractérisé en ce que**
un point de départ (SP) pour le stationnement en une seule fois est déterminé lorsque le véhicule (1) se trouve, lors du passage devant la place de stationnement en bataille (3), au moins temporairement à une distance latérale (a) d'une entrée de place de stationnement (6) qui, une fois ajoutée à la profondeur de la place de stationnement en bataille (3), est inférieure à la plage de détection maximale de l'unité de détection (5) du véhicule (1), et une plage de détection de l'unité de détection (5) étant inférieure ou égale à 5 m et, pour déterminer le point de départ (SP), le véhicule (1) se déplace à une distance latérale comprise entre 0,5 et 2 m de l'entrée de place de stationnement (6) sur la chaussée (2).

2. Procédé selon la revendication 1,
**caractérisé en ce que**
la manoeuvre dans le deuxième sens de déplacement (P2) jusqu'au point de départ (SP) est effectuée à partir d'une position d'arrêt (SPS) du véhicule (1).

3. Procédé selon la revendication 2,
**caractérisé en ce que**
la manoeuvre jusqu'au point de départ (SP) est effectuée uniquement dans le deuxième sens de déplacement (P2).

4. Procédé selon la revendication 2 ou 3,
**caractérisé en ce que**
la position d'arrêt (SPS) du véhicule (1) sur la chaussée (2) est celle qui jouxte la place de stationnement en bataille (3), la position d'arrêt dans la direction longitudinale de la chaussée (2), lorsque le véhicule (1) passe devant la place de stationnement en bataille (3), étant située latéralement à la place de stationnement en bataille (3) de sorte qu'au moins un point de référence (7), qui doit être amené au point de départ (SP), soit situé latéralement à la place de stationnement en bataille (3).

5. Procédé selon la revendication 1,
**caractérisé en ce que**
pendant que le véhicule (1) passe devant la place de stationnement en bataille (3), le véhicule (1) est manoeuvré de manière totalement autonome en direction du point de départ (SP) sans arrêt du véhicule (1).

6. Procédé selon l'une des revendications précédentes,
**caractérisé en ce que**
un point central d'un essieu arrière (8) du véhicule (1) est pris comme point de référence (7) du véhicule (1) qui est déplacé vers le point de départ (SP).

7. Système d'aide au stationnement (4) destiné à un véhicule (1), ledit système comprenant une unité de commande (1) et une unité de détection (5) qui est conçue pour effectuer une procédure de stationnement d'un véhicule (1) selon les revendications 1 à 6.

8. Véhicule (1) comprenant un système d'aide au stationnement (4) selon la revendication 7.
